**Europäisches Patentamt**

**European Patent Office**

**Office européen des brevets**

(19)

(11) Numéro de publication: **0 010 200**
**B1**

(12) **FASCICULE DE BREVET EUROPEEN**

(45) Date de publication du fascicule du brevet: **02.06.82**

(21) Numéro de dépôt: **79103621.3**

(22) Date de dépôt: **24.09.79**

(51) Int. Cl.³: **G 05 D 16/10** //F16H41/20, F16K17/04

(54) **Régulateur-écrêteur de pression et son application à l'alimentation d'un convertisseur hydrocinétique de couple.**

(30) Priorité: **29.09.78 FR 7827976**

(43) Date de publication de la demande:
**30.04.80 Bulletin 80/9**

(45) Mention de la délivrance du brevet:
**02.06.82 Bulletin 82/22**

(84) Etats contractants désignés:
**BE DE GB IT NL SE**

(56) Documents cités:
**FR - A - 2 077 094**
**FR - A - 2 253 158**
**GB - A - 823 848**
**US - A - 3 324 873**
**US - A - 3 517 681**

(73) Titulaire: **REGIE NATIONALE DES USINES RENAULT**
**Boite postale 103 8-10 avenue Emile Zola**
**F-92109 Boulogne-Billancourt (FR)**

(72) Inventeur: **Aubert, Paul**
**71, Rue du Pavé Blanc**
**F-92120 Clamart (FR)**

(74) Mandataire: **Casalonga, Alain et al,**
**BUREAU D.A. CASALONGA OFFICE JOSSE & PETIT Baaderstrasse 12-14**
**D-8000 München 5 (DE)**

Courier Press, Leamington Spa, England.

## Régulateur-écrêteur de pression et son application à l'alimentation d'un convertisseur hydrocinétique de couple

La présente invention, due à la collaboration de M. Paul Aubert, se rapporte à un régulateur-écrêteur de pression utilisant un moyen élastique unique comme organe de réaction pour la fonction régulateur de pression et pour la fonction écrêteur de pression.

On connaît de nombreux dispositifs qui permettent de contrôler et de limiter la valeur de la pression d'un circuit hydraulique à une valeur déterminée. La demande de brevet français 74 39 146 publiée dans le N° 2.253.158 décrit un tel écrêteur de pression comportant un ensemble de soupapes réagissant à une surpression passagère pour ouvrir une communication avec un réservoir.

On connaît également d'autres dispositifs qui permettent de contrôler la valeur de la pression d'un circuit hydraulique et de réguler ladite pression à une valeur voulue. Le brevet américain 3.517.681 décrit par exemple un dispositif régulateur de pression comprenant un tiroir mobile soumis à l'action d'un ressort à l'une de ses extrémités et à la contre-réaction de la pression de sortie régulée à son autre extrémité. La régulation de pression se fait par laminage du fluide hydraulique dans un passage dont les dimensions dépendent de la position du tiroir mobile.

Lorsqu'un circuit hydraulique nécessite l'emploi d'un régulateur et d'un écrêteur de pression, ces deux dispositifs différents sont séparés dans le circuit hydraulique où ils sont utilisés et sont reliés l'un à l'autre par des canalisations.

Chacun de ces dispositifs comporte son propre moyen élastique comme élément de réaction. Dans les dispositifs qui limitent la pression à une valeur déterminée, il y a généralement une bille poussée par un moyen élastique contre un siège au centre duquel arrive une canalisation. Quand la pression dans ladite canalisation dépasse la valeur déterminée au-dessus de laquelle il y aurait des risques de détérioration du circuit hydraulique, la bille repousse le moyen élastique et laisse passer l'huile dans une chambre, laquelle huile s'échappe ensuite par une autre canalisation partant de ladite chambre et qui est reliée le plus souvent au réservoir du circuit hydraulique (voir la demande de brevet français 74 39 146 précitée). Dans les dispositifs qui régulent la pression, il y a généralement une broche centrale qui peut être déplacée d'un côté sous l'action de la pression du circuit hydraulique et du côté opposé sous l'action d'un moyen élastique. La broche est ainsi continuellement en équilibre sous ces deux actions opposées (voir le brevet US 3.517.681 précité).

Cette broche centrale présente divers épaulements qui, dans leur déplacement en translation, jouent le rôle de tiroir en masquant ou découvrant des lumières.

Ledit tiroir étrangle ainsi, plus ou moins, l'arrivée de l'huile sous pression et permet son passage à la canalisation de sortie.

Ces deux types de dispositifs font aussi appel à l'utilisation de deux corps ayant chacun leur moyen élastique propre. Si le circuit hydraulique est intégré dans un bloc hydraulique, chaque dispositif exige un alésage et un logement pour son moyen élastique propre. La présente invention a pour objet de réaliser, à partir de ces enseignements, un seul dispositif régulateur-écrêteur de pression de fabrication particulièrement simple permettant notamment de réduire l'encombrement et de faciliter l'usinage des pièces formant un tel dispositif.

Selon l'invention, le régulateur-écrêteur de pression comprend un corps présentant un alésage central unique dans lequel coulisse une broche faisant office de tiroir. Cette broche présente deux épaulement qui, dans leur déplacement en translation, jouent le rôle de tiroir en masquant ou découvrant plus ou moins, une lumière dans laquelle arrive le fluide de l'alimentation et une lumière par laquelle ledit fluide s'échappe. De plus, le fluide de sortie agit sur l'une des extrémités du tiroir par l'intermediaire d'un gicleur d'ammortissement. Sur l'autre extrémité du tiroir agit un moyen élastique qui équilibre l'action opposée de la pression du fluide de sortie. Ledit moyen élastique agit à son autre extrémité sur un organe d'obturation d'une deuxième canalisation d'arrivée du circuit d'alimentation, cet organe étant monté, comme le moyen élastique dans l'alésage central unique du corps précité. La chamber dans laquelle se logent le moyen élastique unique et l'organe d'obturation est reliée à l'atmosphère ou à une canalisation de retour au réservoir.

Dans un mode de réalisation préféré, le moyen élastique unique peut être un ressort unique.

Dans un autre mode de réalisation préféré, l'organe d'obturation peut être une bille.

Le régulateur-écrêteur de pression, selon l'invention, peut avantageusement être appliqué pour l'alimentation à une pression déterminée d'un convertisseur hydrocinétique de couple et d'un circuit de lubrification d'une boîte de vitesse automatique pour véhicule.

Le régulateur-écrêteur de pression, selon l'invention, présente l'avantage de réunir en un seul appareil deux fonctions hydrauliques en utilisant un seul moyen élastique d'équilibrage. Il ne demande qu'un seul canal d'alimentation et un seul canal de retour au réservoir. Intégré dans un bloc hydraulique, le régulateur-écrêteur de pression, selon l'invention, ne demande qu'un seul alésage au lieu de deux et, lors de la réalisation du block ce dispositif n'exige qu'une seule tête d'usinage au lieu de deux. De plus, il n'y a qu'un seul moyen élastique et qu'un seul logement dudit moyen élastique. Par ailleurs, le régulateur-écrêteur de pression, selon l'invention, permet d'assurer la protection d'un convertisseur hydrocinétique de couple lorsqu'il est branché sur l'alimentation de celui-ci. D'autres caractéristiques et avantages de la présente invention ressortiront de la description qui suit d'un mode de réalisation particulier, donné à titre d'exemple et nullement limitatif, en référence aux dessins annexés sur lesquels:

— la figure 1 représente, en coupe longitudinale, le régulateur-écrêteur selon l'invention;

— la figure 2 représente le régulateur-écrêteur de la figure 1 qui alimente un convertisseur hydrocinétique de couple.

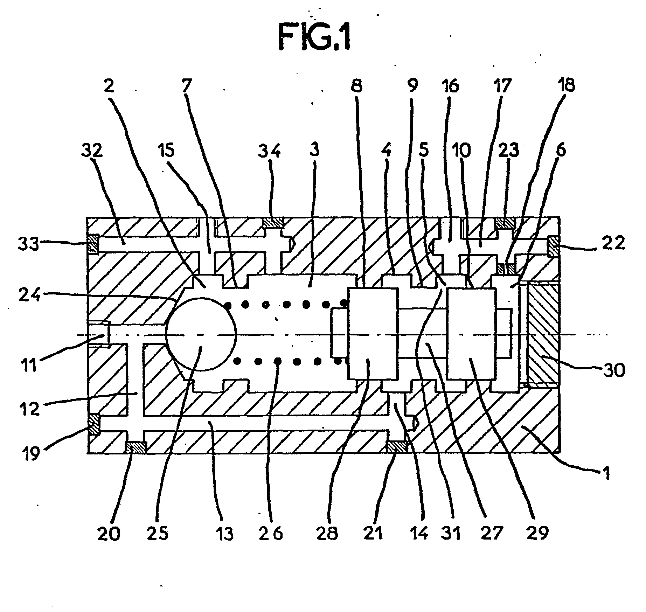

Tel que représenté en couple longitudinale sur la figure 1, le régulateur-écrêteur de pression comprend un corps 1 dans lequel est réalisé un alésage central. Cinq chambres repérées 2, 3, 4, 5 et 6 débouchent dans ledit alésage qui a ainsi quatre portées repérées 7, 8, 9 et 10.

Un canal central 11 débouche dans ledit alésage central. La chambre 3 est reliée au canal 15 de sortie par un canal 32. La chambre 4 est reliée audit canal 11 par des canaux 12, 13 et 14. De la chambre 2 part un canal 15. De la chambre 5 part un canal 16. La chambre 6 est reliée à la chambre 5 par un canal 17 et un gicleur d'amortissement 18. Ces différents canaux sont obtenus par perçage et sont ensuite formés par des bouchons 19, 20, 21, 22, 23, 33 et 34.

Les canaux 11, 15 et 16 ont des filetages pour la fixation des canalisations d'arrivée ou de départ d fluide. Une portée tronconique 24 relie le canal central 11 à la chambre 2. Dans l'alésage central viennent se monter successivement une bille 25, un ressort 26 et une broche 27. Ladite bille 25 vient s'appliquer sur la portée tronconique 24 sous l'action du ressort 26 qui s'appuie, d'une part, sur la bille 25 et, d'autre part, sur la broche 27. Ladite bille 25 a ainsi pour fonction d'obturer la communication entre le canal 11 et la chambre 2. Ladite broche 27 possède deux epaulements 28 et 29 qui coulissent dans les portées 8 et 10. Lesdits épaulements 28 et 29 masquent ou découvrent plus ou mois les lumières des chambres 4 et 5 lorsque la broche 27 se déplace. Un bouchon 30 vient fermer l'alésage central. Le régulateur-écrêteur, selon l'invention, remplit la fonction régulateur de la manière suivante: au repos, lorsque la pression est nulle dans le circuit d'alimentation, c'est-à-dire dans le canal 11 et les canaux 12, 13 et 14, le ressort unique 26, d'une part, plaque la bille 25 sur son siège tronconique 24 et, d'autre part, repousse la broche 27 contre le bouchon 30.

Quand le circuit hydraulique d'alimentation fonctionne, c'est-à-dire qu'une pression s'établit dans ledit circuit et qu'il y a un débit de fluide à travers les canaux 11, 12, 13 et 14, les chambres 4 et 5 et le canal de sortie 16, la broche centrale 27 est soumise à l'action de deux forces opposées: d'une part, la force due au ressort 26 et, d'autre part, la force due à l'action de la pression dans la chambre 6 sur l'extrémité de la broche 27, c'est-à-dire sur la section totale de l'épaulement 29.

Quand la force due à la pression régnant dans la chambre 6 devient supérieure à l'effort du ressort 26, la broche centrale 27 se déplace et vient étrangler le passage d'huile 31. De ce fait, la pression en aval dudit passage 31 diminue, donc l'action due à cette pression dans la chambre 6 sur la broche 27 diminue et sous l'action du ressort 26 ledit passage 31 augmente. La pression qui règne dans le canal de sortie 16, dans le canal 17 et la chambre 6 est donc fonction du ressort 26 et de la section de l'épaulement 29 de la broche 27. La pression régulée à la sortie du dispositif est donnée par l'égalité: Effort du ressort = pression régulée de sortie × section de l'épaulement 29 de la broche 27.

Le régulateur-écrêteur, selon l'invention, remplit la fonction écrêteur de la manière suivante: au repos, lorsque la pression est nulle dans le circuit d'alimentation, c'est-à-dire dans le canal 11, la bille 25 est plaquée sur son siège 24 par le ressort 26. Lorsque la pression s'établit dans le canal 11 et reste inférieure à une valeur prédéterminée, la bille 25 reste plaquée sur son siège 24 et continue d'obturer le canal 11. Lorsque la pression dans le canal 11 dépasse ladite valeur prédéterminée, la bille 25 se soulève de son siège 24 faisant chuter la pression dans le canal 11, en mettant en communication ledit canal 11 avec la chambre 2 et le canal 15 relié au réservoir ou à l'atmosphère. Cette valeur de pression prédéterminée est donnée par l'égalité: Effort du ressort 26 = pression dans le canal 11 × section du cercle de contact de la bille 25 sur son siège, 24.

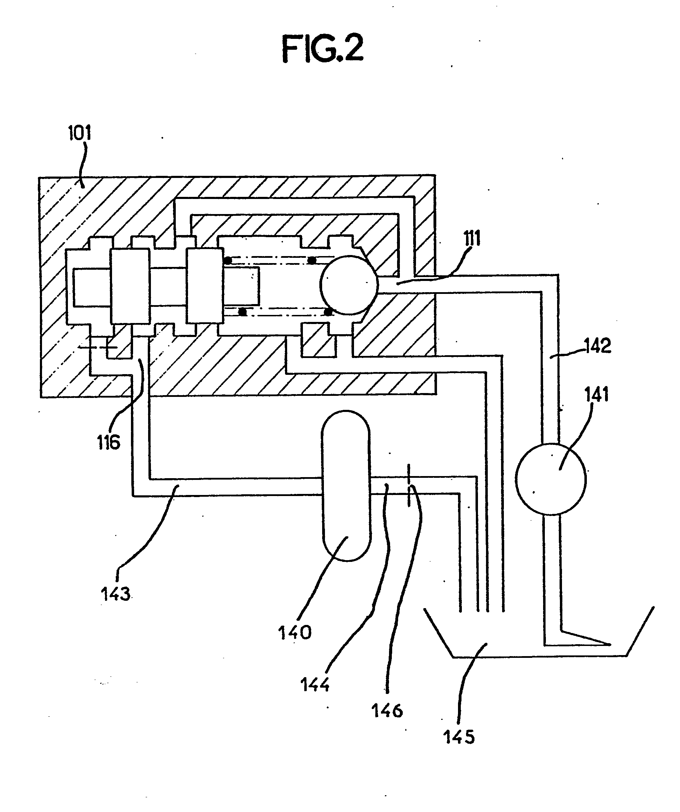

Un exemple d'utilisation du régulateur-écrêteur de pression, selon l'invention, est donné dans la figure 2. Un régulateur-écrêteur 101, décrit ci-dessus, est branché sur l'alimentation d'un convertisseur hydrocinétique de couple 140. Une pompe 141 fournit le débit de fluide à travers la canalisation 142 qui débouche dans le canal d'alimentation 111 du régulateur-écrêteur 101. Une canalisation 143 est branchée entre le canal de sortie 116 du régulateur écrêteur 101 et le convertisseur 140. Ledit convertisseur a sa sortie de fluide branchée sur la canalisation 144 qui retourne au réservoir 145. Un gicleur 146, placé sur la canalisation de retour 144, assure le débit désiré à la sortie du convertisseur 140.

Le régulateur-écrêteur 101 assure ainsi une protection du convertisseur qui se trouve alimenté à une pression régulée à une valeur déterminée et à un débit régulé de la même manière. De plus, le régulateur-écrêteur 101 assure une protection de tout le circuit hydraulique contre tout excès de pression accidentel.

## Revendications

1. Dispositif régulateur-écrêteur de pression destiné à être monté dans un circuit hydraulique entre une entrée à la pression d'alimentation et un retour à un réservoir afin de fournir à sa sortie une pression régulée et de protéger le circuit contre tout excès de pression accidentel, caractérisé par le fait qu'il comprend en combinaison dans un alésage central unique d'un corps (1):

— un obturateur (25) capable d'obturer un canal d'entrée (11) faisant communiquer l'alésage central avec la pression d'alimentation et de laisser passer, lorsqu'il est ouvert, le fluide vers le réservoir;

— un tiroir mobile (27) comportant un épaulement (29) coopérant avec une portée (9) de l'alésage central pour étrangler plus ou moins un passage faisant communiquer le canal d'entrée (11, 12, 13, 14) avec la sortie (16);

— un moyen élastique (26) prenant appui d'une part sur l'obturateur (25) afin de solliciter celui-ci en direction de son siège (24) et d'autre part sur un second épaulement (28) du tiroir (27) pour solliciter ce dernier dans le sens de l'ouverture dudit passage d'étranglement;

— une chambre d'extrémité (6) délimitée par la section frontale dudit épaulement (29) du tiroir et soumise à la pression de sortie par l'intermédiaire d'un gicleur d'amortissement (18) de façon à solliciter le tiroir dans le sens de la fermeture dudit passage d'étranglement.

2. Dispositif régulateur-écrêteur de pression selon la revendication 1, caractérisé par le fait que le moyen élastique (26) est un ressort.

3. Dispositif régulateur-écrêteur de pression selon la revendication 1, caractérisé par le fait que l'obturateur (25) est une bille.

4. Application d'un dispositif régulateur-écrêteur de pression selon l'une des revendications précédentes, caractérisé par le fait que le dispositif est utilisé pour l'alimentation d'un convertisseur hydrocinétique de couple (140).

## Claims

1. A pressure control and relief valve designed to be installed in a hydraulic circuit between an input at the feed pressure and a return to a reservoir so as to supply a controlled pressure at its outlet and to protect the circuit against any accidental overpressure, characterized in that it comprises the combination in a single centre bore of a valve body (1) of:

— a blocking element (25) capable of blocking off an inlet duct (11) joining the centre bore up with the feed pressure and allowing, when it is open, the fluid to flow to the reservoir;

— a moving spool (27) comprising an enlargement (29) working in conjunction with a surface (9) projecting from the centre bore to throttle to a greater or lesser extent a passageway joining the inlet duct (11, 12, 13, 14) with the outlet (16);

— an elastic means (26) bearing on the blocking element (25) on the one hand, so as to push this towards its seat (24) and bearing on a second enlargement (28) of the spool (27) on the other hand, so pushing the latter in a direction tending to open the said throttle passageway;

— an end chamber (6) delimited by the frontal cross-section of the said spool enlargement (29) and subjected to the outlet pressure through a damping nozzle (18) so as to push the spool in a direction tending to close the said throttle passageway.

2. The pressure control and relief valve according to claim 1, characterized in that the elastic means (26) is a spring.

3. The pressure control and relief valve according to claim 1, characterized in that the blocking element (25) is a ball.

4. An application of a pressure control and relief valve according to any of the preceding claims, characterized in that the valve is used to supply a hydrokinetic torque converter (140).

## Patentansprüche

1. Vorrichtung zum Druckregeln und -begrenzen, die zwischen dem Eingang mit Speisedruck und dem Rückfluß zu einem Tank in einen Hydrualikkreis eingebaut werden soll, um an Ausgang einen geregelten Druck zu liefern und den Hydraulikkreis gegen jeden zufälligen Überdruck zu schützen, dadurch gekennzeichnet, daß die Vorrichtung in einer einzigen Zentralbohrung in einem Gehäuse (1) in Kombination enthält:

— Eine Verschlußvorrichtung (25), die einen Eingangskanal (11) verschließen kann, der die Zentralbohrung mit dem Speisedruck verbindet und, sobald sie offen ist, die Flüssigkeit in Richtung zum Tank fließen läßt;

— einen beweglichen Schieber (27) mit einem Bund (29), der mit einem Radius (9) der Zentralbohrung zusammenwirkt um einen Durchgang mehr oder weniger zu drosseln, der den Eingangskanal (11, 12, 13, 14) mit dem Ausgang (16) verbindet;

— ein elastisches Mittel (26), das sich auf der einen Seite gegen die Verschlußvorrichtung (25) abstützt um diese in Richtung auf ihren Sitz (24) zu drücken, und sich auf der anderen Seite gegen einen zweiten Bund (28) des Schiebers (27) abstützt um diesen letzteren in Richtung der Öffnung der genannten Drossel zu drücken;

— eine Endkammer (6), die vom Frontteil des genannten Bundes (39) des Schiebers begrenzt wird und mittels einer Dämpfungsdüse (18) unter Ausgangsdruck steht, um den Schieber in Sinne des Schließens der genannten Drossel zu drücken.

2. Vorrichtung zum Druckregeln und -begrenzen gemäß Anspruch 1, dadurch gekennzeichnet, daß das elastische Mittel (26) eine Feder ist.

3. Vorrichtung zum Druckregeln und -begrenzen gemäß Anspruch 1, dadurch gekennzeichnet, daß die Verschlußvorrichtung (25) eine Kugel ist.

4. Anwendung einer Vorrichtung zum Druckregeln und -begrenzen gemäß eine der vorstehenden Ansprüche, dadurch gekennzeichnet, daß diese Vorrichtung zur Speisung eines Hydrokinetischenwandlers eingesetzt wird.

FIG.1

# FIG.2